# EUROPEAN PATENT SPECIFICATION

(11) **EP 3 372 525 B1**
(45) Date of publication and mention of the grant of the patent: **05.05.2021**
(21) Application number: 18160468.7
(22) Date of filing: 07.03.2018
(51) Int. Cl.: B65D 75/58, A22C 13/00

(54) **CASING FOR FOOD PRODUCTS**
HÜLLE FÜR LEBENSMITTELPRODUKTE
ENVELOPPE POUR PRODUITS ALIMENTAIRES

(30) Priority: 09.03.2017 ZA 201701701
(43) Date of publication of application: 12.09.2018
(73) Proprietor: Colpak (Pty) Ltd, Kensington 7405 Cape Town (ZA)
(72) Inventor: GEORGE, Derrick, 7405 Cape Town (ZA); BROEKHUYSEN, Steven, 7405 Cape Town (ZA)
(74) Representative: Murgitroyd & Company

(56) References cited:
- EP-A1- 1 227 048
- JP-A- 2007 105 898
- US-A1- 2010 183 830
- US-A1- 2013 095 335

## Description

### FIELD OF THE INVENTION

This invention relates to casings for food products.

### BACKGROUND TO THE INVENTION

Cooked meat products such as polony, liver sausage and salami are packaged in cylindrical casings which are closed at both ends by metal clips. The casings are often opened by the simple expedient of cutting through them, usually close to one end.

There is a demand for a food product of this configuration the casing of which contains one serving of the product and which casing can be opened without the use of a knife or other form of cutter. One use of such a product is to be included in a scholar's lunch box. Such a product can be opened by the scholar without the need for the scholar to find and use a cutter.

A casing which can be opened without the use of the knife or other cutter is disclosed in United States Patent Publication US 2002/0102375A1.

The casing disclosed is a laminate comprising three films. The outer films are of polypropylene and the centre film is a barrier film of Nylon. The peel strength between the outer film of polypropylene and the Nylon film is lower than the peel strength between the inner film of polypropylene and the Nylon film.

The casing is closed by a longitudinally extending overlap seal with a longitudinally extending pull strip protruding outwardly from the seal. Notches are provided in the edge of the pull strip.

To open the casing the pull strip is gripped and pulled towards the seal. The pull strip tears between two notches to form a tab. Because of the strength of the seal it does not fail when the tears resulting from the opening force exerted on the pull tab reach the seal. It is the film of polypropylene immediately adjacent the seal and on the inside of the seal which tears. The low peel force required to separate the torn film of polypropylene from the Nylon film permits these two films to be separated thereby to open the casing after the polypropylene film tears.

The different peel strengths between the layers is essential to permit this casing to be opened

A casing with the features of the preamble of claim 1 is known from US2010183830 A1.

### BRIEF DESCRIPTION OF THE INVENTION

According to the present invention there is provided a casing for a food product with the features of claim 1.

### BRIEF DESCRIPTION OF THE DRAWINGS

For a better understanding of the present invention, and to show how the same may be carried into effect, reference will now be made, by way of example, to the accompanying drawings in which:-
Figure 1 illustrates, in lay flat form, a strip which can be formed into a cylindrical casing;
Figure 2 a section on the line ii-ii of Figure 1; and
Figure 3 is a diagrammatic representation in the form of a section through a cylindrical casing in accordance with the present invention.

### DETAILED DESCRIPTION OF THE DRAWINGS

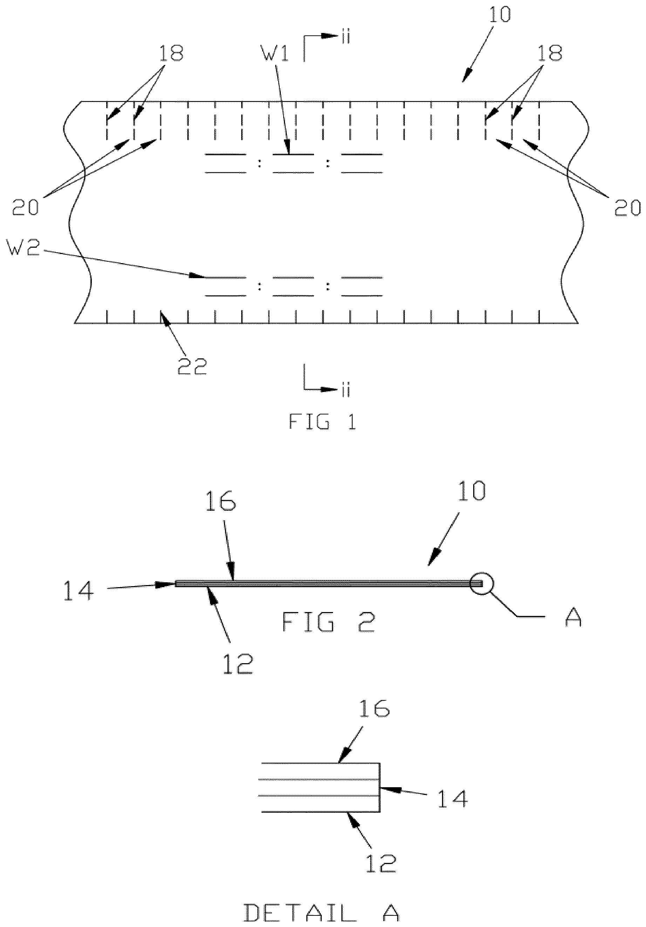

The strip 10 shown in Figure 1 is a three film laminate comprising a polyolefin film 12, a polyamide film 14 and a third film 16 in the form of a peelable ionomer. The films are laminated with the polyamide between the polyolefin, which is preferably a polyethylene blend, and the peelable ionomer which is preferably Surlyn. Surlyn is the registered trade mark of DuPont.

The polyethylene blend can be of LLDPE and HDPE and is the inside layer when the strip is formed into a cylindrical casing. It is consequently the film which is in contact with the food product and has moisture barrier properties. The polyamide forms a barrier to oxygen transmission and also provides stretch and shrink characteristics to the laminate.

The peelable ionomer film constitutes the outside layer of the cylindrical casing.

One edge of the laminated strip is formed with lines of perforations designated 18. Each line 18 extends inwardly from one edge of the laminate. The lines 18 bound a plurality of pull tabs 20. The perforations constitute web weakening formations which facilitate initiation of transverse tearing on the web. The perforations can be replaced by notches in the edge of the web.

Further lines of perforations 22 are provided along the other edge of the laminate. Each line of perforations 22 is shorter than any of the lines 18.

As the strip is rolled to form a cylindrical casing by overlapping edge zones of the strip and forming an overlap seal, the polyethylene film 12 which is on the inside comes into contact with the peelable ionomer film 16 as shown in Figure 2. The seal is formed along the sealing line 24 between the polyethylene and the ionomer.

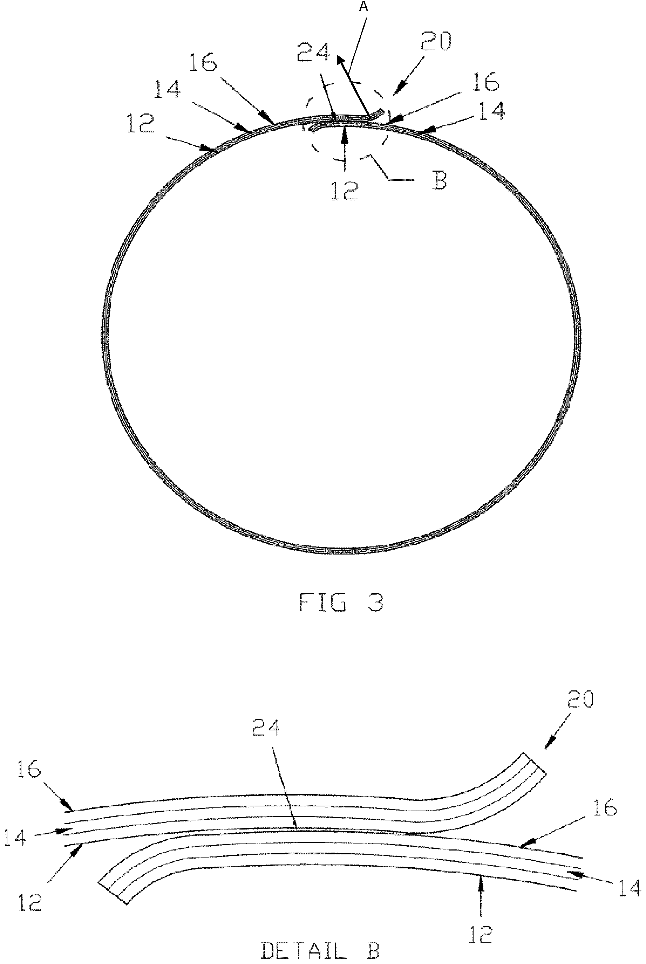

The parts of the strip where sealing takes place are shown at S1 and S2 in Figure 1. It will be seen that they are positioned just inwardly of the lines of perforations 18, 22. Consequently the edge zone of the strip in which the perforations 18 are formed projects from the seal 24 as shown in Figure 3.

It is possible to open a filled casing by prising up the free edge of the laminate, gripping one of the tabs 20, and pulling it in the direction of the arrow A in Figure 3. The laminate tears along the perforations 18 which bound the tab 20 that is being pulled. Continuing to pull on the tab 20 results in the tear lines extending into the laminate beyond the ends of the perforations 18. Because of the nature of the seal between the films 12 and 16, the peeling action is not inhibited by the presence of the seal and the two films readily separate despite the presence of the seal. Eventually the tear lines extend substantially the whole way around the casing which then separates into two parts. This enables easy access to be had to the contents of the casing.

## Claims

1. A casing for a food product which has been formed from a strip which has been manipulated to a cylindrical shape with opposed edge zones of the strip overlapping, the casing comprising films of synthetic plastics material which are laminated together, one of the two outer films of the laminate being a peelable ionomer and the other of the two outer films of the laminate being an olefin, the olefin being the inner layer of the casing and the peelable ionomer being the outer layer of the casing, there being an overlap seal between the outer peelable ionomer layer of the one edge zone and the inner olefin layer of the other edge zone where the edge zones overlap, one edge zone protruding outwardly from the overlap seal, said one edge zone having a plurality of weakening formations for facilitating initial tearing of the casing in the circumferential direction, the weakening formations being the boundaries of pull tabs, **characterised in that** the strength of the overlap seal between the edge zones permits the inner olefin film of one edge zone and the outer peelable ionomer film of the other edge zone to separate when one of the tabs is pulled in the opening direction, separation between the opposing edge zones of the casing continuing across said overlap seal without separation being inhibited by the overlap seal between the inner and outer films.

## Patentansprüche

1. Eine Hülle für ein Lebensmittelprodukt, die aus einem Streifen gebildet worden ist, der zu einer zylindrischen Form, bei der sich entgegengesetzte Randzonen des Streifens überlappen, manipuliert worden ist, wobei die Hülle Folien aus synthetischem Kunststoffmaterial beinhaltet, die miteinander laminiert sind, wobei eine der zwei äußeren Folien des Laminats ein abziehbares lonomer ist und die andere der zwei äußeren Folien des Laminats ein Olefin ist, wobei das Olefin die innere Schicht der Hülle ist und das abziehbare lonomer die äußere Schicht der Hülle ist, wobei zwischen der äußeren abziehbaren lonomerschicht der einen Randzone und der inneren Olefinschicht der anderen Randzone eine Überlappungsdichtung vorhanden ist, in der sich die Randzonen überlappen, wobei eine Randzone von der Überlappungsdichtung nach außen vorsteht, wobei die eine Randzone eine Vielzahl von Schwächungsformationen zum Erleichtern des anfänglichen Aufreißens der Hülle in die Umfangsrichtung aufweist, wobei die Schwächungsformationen die Grenzen von Zuglaschen sind, **dadurch gekennzeichnet, dass** die Stärke der Überlappungsdichtung zwischen den Randzonen gestattet, dass sich die innere Olefinfolie einer Randzone und die äußere abziehbare lonomerfolie der anderen Randzone trennen, wenn eine der Laschen in die Öffnungsrichtung gezogen wird, wobei die Trennung zwischen den entgegengesetzten Randzonen der Hülle über die Überlappungsdichtung hinweg fortgesetzt wird, ohne dass die Trennung durch die Überlappungsdichtung zwischen der inneren und der äußeren Folie verhindert wird.

## Revendications

1. Une enveloppe pour un produit alimentaire qui a été formée à partir d'une bande qui a été manipulée en une conformation cylindrique, des zones de bord opposées de la bande se chevauchant, l'enveloppe comprenant des films en matière plastique synthétique qui sont stratifiés ensemble, l'un des deux films externes du stratifié étant un ionomère pelable et l'autre des deux films externes du stratifié étant une oléfine, l'oléfine étant la couche interne de l'enveloppe et l'ionomère pelable étant la couche externe de l'enveloppe, un scellement de chevauchement se trouvant entre la couche d'ionomère pelable externe de cette une zone de bord et la couche d'oléfine interne de l'autre zone de bord à l'endroit où les zones de bord se chevauchent, une zone de bord faisant saillie vers l'extérieur à partir du scellement de chevauchement, ladite une zone de bord ayant une pluralité de formations d'affaiblissement pour faciliter un déchirement initial de l'enveloppe dans le sens circonférentiel, les formations d'affaiblissement étant les limites de languettes de tirage, **caractérisée en ce que** la résistance du scellement de chevauchement entre les zones de bord permet au film d'oléfine interne d'une zone de bord et au film d'ionomère pelable externe de l'autre zone de bord de se séparer lorsque l'une des languettes est tirée dans le sens de l'ouverture, la séparation entre les zones de bord de l'enveloppe qui se font face continuant de part et d'autre dudit scellement de chevauchement sans que la séparation ne soit empêchée par le scellement de chevauchement entre les films interne et externe.
